# EUROPEAN PATENT APPLICATION

(11) **EP 1 953 854 A1**
(43) Date of publication of application: **06.08.2008**
(21) Application number: 06832783.2
(22) Date of filing: 10.11.2006
(51) Int. Cl.: H01M 4/88, B01J 23/42, B01J 35/10, H01M 4/86, H01M 4/96, H01M 8/10

(54) **FUEL CELL CATALYST, FUEL CELL ELECTRODE AND POLYMER ELECTROLYTE FUEL CELL PROVIDED WITH SUCH FUEL CELL ELECTRODE**

(30) Priority: 14.11.2005 JP 2005328836
(71) Applicant: Cataler Corporation, Kakegawa-shi Shizuoka 437-1492 (JP); TOYOTA JIDOSHA KABUSHIKI KAISHA, Toyota-shi Aichi 471-8571 (JP)
(72) Inventor: HORIUCHI, Yosuke, Kakegawa-shi, Shizuoka 437-1492 (JP); TERADA, Tomoaki, Kakegawa-shi, Shizuoka 437-1492 (JP); NAGATA, Takahiro, Kakegawa-shi, Shizuoka 437-1492 (JP); TABATA, Toshiharu, Kakegawa-shi, Shizuoka 437-1492 (JP); ENOMOTO, Susumu, Kakegawa-shi, Shizuoka 437-1492 (JP); TAKAHASHI, Hiroaki, Toyota-shi, Aichi 471-8571 (JP); SAITO, Katsushi, Toyota-shi, Aichi 471-8571 (JP)
(74) Representative: Kuhnen & Wacker
(86) International application number: PCT/JP2006/322903
(87) International publication number: WO 2007/055411

(57) **Abstract**

A fuel cell catalyst in which catalyst particles are supported on a carrier is provided, wherein the value of the average catalyst carrier pore diameter / the catalyst metal (PGM) particle diameter is 0.5 to 1.8. Such fuel cell catalyst is less likely to cause voltage drops even after being used for a long period of time.

## Description

### Technical Field

The present invention relates to a fuel cell catalyst which can suppress voltage drops after endurance tests, a fuel cell electrode, a polymer electrolyte fuel cell provided with such fuel cell electrode.

### Background Art

Polymer electrolyte fuel cells having a polymer electrolyte membrane can be easily reduced in size and weight. For this reason, there are growing expectations for the practical application thereof as a power source for mobile vehicles, such as electric vehicles, and for small-sized cogeneration systems.

Electrode reactions within the catalyst layers of the anode and cathode of a polymer electrolyte fuel cell proceed at a three-phase interface (to be hereafter referred to as a reaction site) where reaction gas, catalysts, and a fluorine-containing ion exchange resin (electrolyte) exist simultaneously. Accordingly, in the polymer electrolyte fuel cells, the catalyst layers are conventionally made of catalysts (such as metal-supporting activated carbon, for example, consisting of a carrier comprising a conductive carbon material such as activated carbon or carbon black with a large specific surface area by which a metal catalyst, such as platinum, is supported).

Dispersion forms of noble metal particles serving as catalysts differ depending on the carrier form. Accordingly, it can be expected that catalytic activity significantly changes in accordance with the carrier form. In addition, electrode characteristics also differ depending on the form of the carrier that supports a catalyst that constitutes an electrode.

In view of the above, in order to provide a catalyst carrying noble metal particles in a high-dispersion state, such catalyst having high catalytic activity, JP Patent Publication (Kokai) No. 2000-100448 A discloses the invention of polymer electrolyte fuel cell catalyst in which a carrier comprising carbon fine powder supports a noble metal, wherein 20% or less of all pores are 60 angstroms in diameter. In particular, the reference discloses that carbon fine powder having a DBP oil adsorption of 200 cc/100 g to less than 495 cc/100 g and a specific surface area of 300 m²/g to less than 1270 m²/gs is used as a carrier.

Further, it is an important technical objective regarding polymer electrolyte fuel cells to improve the durability thereof. In JP Patent Publication (Kokai) No. 2000-268828 A, it is an objective to provide a polymer electrolyte fuel cell using an electrode that is excellent in water repellency and in corrosion resistance, whereby stable output can be obtained over a long period. The reference discloses an electrode catalyst comprising a carbon carrier having an average lattice plane distance (designated "d002") of the [002] surface of 0.337 to 0.348 nm, a crystallite size (designated "Lc (002)") of 3 to 18 nm, and a specific surface area of 70 to 800 m²/g, on which a platinum or platinum alloy is supported.

### Disclosure of the Invention

It is essential to improve the durability of a fuel cell electrode catalyst for practical application of fuel cell vehicles. Hitherto, the improvement in such durability has been examined. As a result, catalyst deterioration resulting from particle growth has been found to be problematic.

Thus, it is an objective of the present invention to provide a polymer electrolyte fuel cell catalyst used for fuel cell vehicles and the like that is less likely to cause voltage drops after a long-term use.

In addition, it is another objective of the present invention to secure the sufficient presence of a three-phase interface on a carbon carrier, where reaction gas, catalysts, and electrolytes meet, so as to improve catalyst efficiency. Accordingly, an electrode reaction proceeds with efficiency so that fuel cell power generation efficiency can be improved. Further, it is another objective of the present invention to provide an electrode having excellent properties and a polymer electrolyte fuel cell comprising such electrode, such fuel cell being capable of producing a high cell output.

The present inventors focused on the initial particle diameter of catalyst particles. They have found that the above problems can be solved as follows. When a conductive carbon material serving as a carrier is allowed to have a pore diameter substantially equivalent (at a nano-order level) to the initial particle diameter of catalyst particles or even when the pore diameter of a conductive carbon material serving as a carrier does not correspond to the initial particle diameter of catalyst metal (PGM) particles, particle growth (sintering) of catalyst particles is suppressed by allowing catalyst metal (PGM) particles to be at least partially contained in pores of the carrier supporting such catalyst particles. This has led to the completion of the present invention.

Specifically, in a first aspect, the present invention relates to a fuel cell catalyst, in which catalyst particles are supported on a carrier. The present invention is characterized in that the value of the average catalyst carrier pore diameter / the catalyst metal (PGM) particle diameter is 0.5 to 1.8.

When the average catalyst carrier pore diameter / the catalyst metal (PGM) particle diameter is less than 1.8, catalyst metal particles are allowed to enter pore spaces in a conductive carbon material serving as a carrier such that catalyst metal particles come into contact with each other. Accordingly, particle growth (sintering) in terms of catalyst particle diameter can be suppressed even after fuel cell operation endurance tests.

In addition, upon endurance tests, when catalyst metal particles have a catalyst metal (PGM) particle diameter that is larger than the average catalyst carrier pore diameter, such catalyst metal particles migrate on a carrier during endurance tests so that two or more catalyst metal particles come into contact with one another. In such case, metal catalyst particles that are in contact with one another are sintered, resulting in particle growth. According to the present invention, the value of the average catalyst carrier pore diameter / the catalyst metal (PGM) particle diameter is 0.5 or more. Thus, even in a case in which the catalyst metal particle diameter is larger than the average catalyst carrier pore diameter, catalyst metal (PGM) particles are at least partially contained in carrier pores so that anchor effects are exhibited. In addition, particle growth (sintering) in terms of catalyst particle diameter can be suppressed even after fuel cell operation endurance tests by restricting free migration of catalyst metal particles on a carrier.

As a result, a fuel cell catalyst having improved durability, which is less likely to cause voltage drops even during long fuel cell operation, can be obtained.

According to the present invention, preferably, the above carrier is a conductive carbon material in which pores having a diameter of 2.5 nm or less account for 60% or more of the total pore volume.

According to the present invention, the average catalyst carrier pore diameter / the catalyst metal (PGM) particle diameter is 0.5 to 1.8. In addition to that, the specific surface area of a conductive carbon material is preferably 2000 m²/g or more. Thus, particle growth (sintering) in terms of catalyst particle diameter is further suppressed so that it is possible to improve dispersibility of catalyst particles, resulting in the improvement of power generation performance of fuel cells. In particular, the specific surface area of a conductive carbon material is preferably 2000 to 3000 m²/g.

Preferred examples of the above conductive carbon material to be used include activated carbon and carbon black.

In the case of the fuel cell catalyst of the present invention, particle growth (sintering) is suppressed. As a result, the average particle diameter after a 1000-hour endurance test is suppressed to 5.0 nm or less.

Various types of known fuel cell catalysts can be used as the fuel cell catalyst of the present invention. Specifically, preferred examples thereof include at least one type of catalyst selected from the group consisting of noble metal catalysts, noble metal alloy catalysts, composite catalysts comprising noble metals and transition metals, composite catalysts comprising noble metals and rare earth elements, and multicomponent catalysts comprising noble metals.

In a second aspect, the present invention relates to a fuel cell electrode using the above fuel cell catalyst. Such fuel cell catalyst is used for an anode and/or cathode.

In a third aspect, the present invention relates to a polymer electrolyte fuel cell comprising an anode, a cathode, and a polymer electrolyte membrane that is provided between the anode and the cathode, in which a fuel cell electrode in which the above fuel cell catalyst is used for the anode and/or cathode is provided.

In the case of the fuel cell catalyst of the present invention, when a conductive carbon material serving as a carrier is allowed to have a pore diameter substantially equivalent (at a nano-order level) to the initial particle diameter of catalyst particles or even when the pore diameter in a conductive carbon material serving as a carrier does not correspond to the initial particle diameter of the catalyst metal (PGM) particle, particle growth (sintering) of catalyst particles is suppressed by allowing particles of a catalyst metal (PGM) to be at least partially contained in pores of the carrier supporting such catalyst particles. Accordingly, even after endurance tests, high power generation performance can be maintained. That is, such fuel cell catalyst is less likely to cause voltage drops even after long-term use.

In addition, the sufficient presence of a three-phase interface on a carbon carrier, where reaction gas, catalysts, and electrolytes meet, can be secured such that catalyst efficiency can be improved. Accordingly, an electrode reaction proceeds with efficiency so that fuel cell power generation efficiency can be improved.

As described above, it becomes possible to structure a polymer electrolyte fuel cell provided with the fuel cell catalyst of the present invention that has high battery output. In addition, as described above, the fuel cell catalyst of the present invention is excellent in durability and has high catalyst efficiency. Thus, it becomes possible to obtain stable battery outputs at high levels for a long period of time from the polymer electrolyte fuel cell of the present invention provided with such fuel cell catalyst.

### Brief Description of the Drawings

Fig. 1 schematically shows the condition of the fuel cell catalyst of the present invention in a state of being supported.
Fig. 2 shows the correlation between the value of the average catalyst carrier pore diameter (A) / the catalyst metal (PGM) particle diameter (B) and the value of catalyst metal (PGM) particle diameter / the initial catalyst metal (PGM) particle diameter obtained after endurance tests involving the catalyst powders obtained in Examples 1 to 6 and Comparative examples 1 to 4.
Fig. 3 shows the relationship between endurance time and cell voltage.
Fig. 4 shows pore distributions for the activated carbon of Example 1, the activated carbon in Comparative example 1, and the carbon black in Comparative example 3.
Fig. 5 shows the relationship between pore volume percentage (pore diameter: 2.5 nm or less) and voltage after a 1000-hr endurance test.

### Best Mode for Carrying Out the Invention

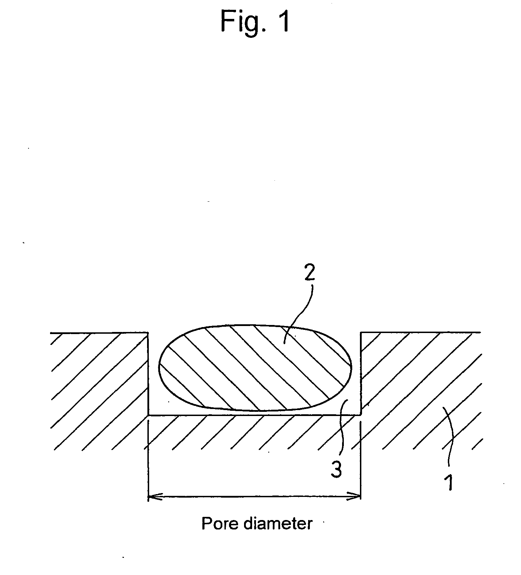

Fig. 1 schematically shows the condition of the fuel cell catalyst of the present invention in a state of being supported. The catalyst-supporting carrier of the present invention comprising a catalyst (for example, activated carbon 1 (supporting platinum or the like)) has nano-level activated carbon pores 3 (1.3 to 2.45 nm), which are filled with Catalyst particles 2 of platinum or the like. The pore diameter is substantially equivalent to the catalyst particle diameter. Thus, particle growth (sintering) in terms of catalyst particle diameter can be suppressed even after endurance tests such as one involving fuel cell operation. In addition, a polymer electrolyte (not shown) thinly covers the surface and the pore surfaces of activated carbon. Accordingly, it is possible to sufficiently secure a three-phase interface where a reactive gas, a catalyst, and an electrolyte associate in activated carbon such that catalyst efficiency can be improved.

Likewise, as shown in fig. 1, even in a case in which nano-level pores in activated carbon are not filled with catalyst particles of platinum or the like, and the catalyst metal particle diameter is larger than the average catalyst carrier pore diameter, if the value of the average catalyst carrier pore diameter / the catalyst metal (PGM) particle diameter is 0.5 or more, catalyst metal particles are at least partially contained in carrier pores and thus exhibit anchor effects. Therefore, free migration of catalyst metal particles on the carrier can be suppressed. As a result, particle growth (sintering) in terms of catalyst particle diameter can be suppressed even after endurance tests such as one involving fuel cell operation.

Examples of a noble metal catalyst supported on a conductive carbon material include platinum and a platinum alloy. Examples of such platinum alloy include platinum-transition metal alloys such as a platinum-iron alloy, a platinum-nickel alloy, a platinum-cobalt alloy, and a platinum-copper alloy; and platinum-noble metal alloys such as a platinum-palladium alloy and a platinum-rhodium alloy. Preferably, the content of a catalyst supported (such content corresponding to a percentage of the weight of the catalyst to the total weight of activated carbon and a catalyst) is approximately 20% to 80% by weight.

### Examples

Hereafter, the fuel cell catalyst and the polymer electrolyte fuel cell of the present invention are described in detail with reference to the following examples.

### [Example 1]

Activated carbon having a large surface area (2500 m²/g) (471 g) was added to pure water (0.5 L) so as to be dispersed therein. A hexahydroxoplatinum nitrate solution containing platinum (4.71 g) was added dropwise to the dispersion solution and mixed well with carbon particles. 0.05 N ammonia (approximately 10 mL) was added thereto such that the pH was adjusted to approximately 10. Accordingly, a hydroxide was formed and deposited on the surface of each carbon particle. The resulting dispersion solution was repeatedly subjected to washing by filtration until the conductivity of the filtration discharge became 100 µS/cm or less. Then, the obtained powder was dried at 100°C for 10 hours.

The density of supported platinum in the obtained platinum support catalyst powder was 50.0 wt%. Further, XRD measurement was carried out and the Pt peak alone was observed. Then, the average particle diameter was calculated based on the peak position and the half value breadth of Pt (111) surface, which were obtained at around 39°C. The average particle diameter was 1.3 nm.

### [Examples 2 to 6 and Comparative examples 1 to 4]

Next, in order to examine influences of the specific surface area of a carrier, the following catalyst powders were prepared in the same manner as in Example 1.
Example 2: Activated carbon (specific surface area: 2000 m²/g); the amount of catalyst contained: 4.71 g of platinum
Example 3: Activated carbon (specific surface area: 3000 m²/g); the amount of catalyst contained: 4.71 g of platinum
Example 4: Activated carbon (specific surface area: 2500 m²/g); the amount of catalyst contained: 4.71 g of platinum and 0.2 g of Ni
Example 5: Carbon black (specific surface area: 230 m²/g); the amount of catalyst contained: 4.71 g of platinum
Example 6: Activated carbon (specific surface area: 161 m²/g); the amount of catalyst contained: 4.71 g of platinum
Comparative example 1: Activated carbon (specific surface area: 400 m²/g); the amount of catalyst contained: 4.71 g of platinum
Comparative example 2: Printex XE2 (trade name, specific surface area: 1200 m²/g); the amount of catalyst contained: 4.71 g of platinum
Comparative example 3: Ketjen EC (trade name, specific surface area: 800 m²/g); the amount of catalyst contained: 4.71 g of platinum
Comparative example 4: Vulcan (specific surface area: 400 m²/g); the amount of catalyst contained: 4.71 g of platinum

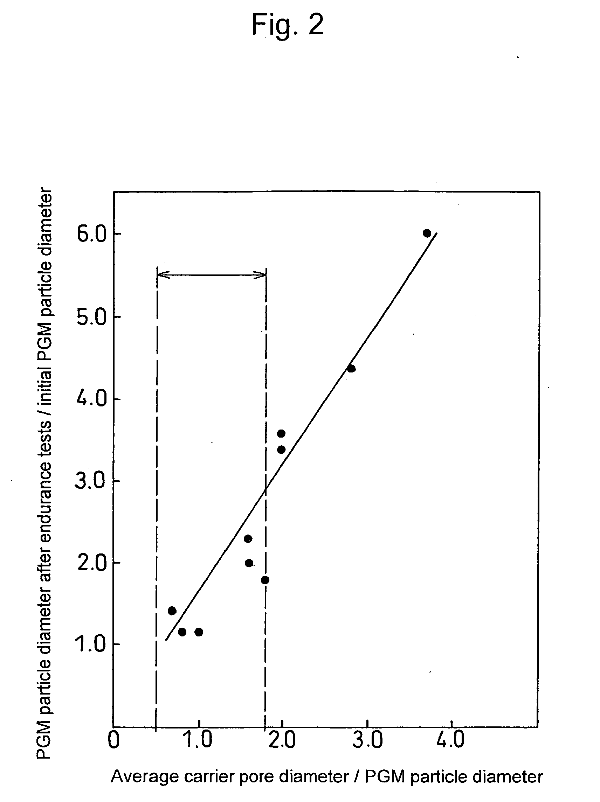

Initial physical property values of the individual catalyst powders obtained in Examples 1 to 6 and Comparative examples 1 to 4 are summarized in table 1 below. Also, fig. 2 shows the correlation between the value of the average catalyst carrier pore diameter (A) / the catalyst metal (PGM) particle diameter (B) and the value of catalyst metal (PGM) particle diameter / the initial catalyst metal (PGM) particle diameter obtained after endurance tests involving the catalyst powders obtained in Examples 1 to 6 and Comparative examples 1 to 4.

In addition, average pore diameter can be measured with the use of, for example, a nitrogen pore distribution measurement apparatus (product name: Tristar 3000, Shimadzu Corporation). A container containing activated carbon is evacuated with the use of the nitrogen pore distribution measurement apparatus. Subsequently, nitrogen is injected into the container containing activated carbon at constant intervals such that the nitrogen partial pressure reaches atmospheric pressure. Then, the amount of nitrogen adsorption at the nitrogen partial pressure at each interval is measured. Herein, the total pore volume is calculated based on the amount of total oxygen adsorption obtained at atmospheric pressure. Also, since the diameter of a pore that absorbs nitrogen at the nitrogen partial pressure at each interval is generally known, the pore diameter distribution is calculated based on the amount of nitrogen adsorption at the nitrogen partial pressure at each interval. Average pore figures can be obtained by integrating pore volume in ascending order of pore diameter based on pore diameter distribution so as to obtain pore diameter when the integrated pore volume reaches 50% of the total pore volume.

**Table 1**

| | Density of supported catalyst (wt%) | Volume of pores 2.5 nm or less in diameter (%) | Average pore diameter (nm) A | Carrier specific surface area (m²/g) | Cell performance (V) | | Average particle diameter (nm) | | A/B |
|---|---|---|---|---|---|---|---|---|---|
| | Pt | | | | Initial | After endurance test | Initial B | After endurance test | |
| Example 1 | 50 | 78 | 2.3 | 2500 | 0.72 | 0.7 | 1.3 | 2.4 | 1.8 |
| Example 2 | 50 | 72 | 2.4 | 2000 | 0.68 | 0.65 | 1.4 | 2.8 | 1.7 |
| Example 3 | 50 | 84 | 1.9 | 3000 | 0.75 | 0.66 | 1.1 | 2.5 | 1.7 |
| Example 4 | 50 (Ni:2%) | 73 | 2.3 | 2500 | 0.61 | 0.58 | 3.2 | 4.6 | 0.7 |
| Example 5 | 50 | 21 | 3.7 | 230 | 0.55 | 0.52 | 3.8 | 4.2 | 1.0 |
| Example 6 | 50 | 67 | 2.4 | 161 | 0.59 | 0.55 | 2.9 | 3.3 | 0.6 |
| Comparative example 1 | 50 | 55 | 3.4 | 400 | 0.69 | 0.49 | 1.7 | 6.1 | 2.0 |
| Comparative example 2 | 50 | 28 | 7.4 | 1200 | 0.67 | 0.46 | 2.0 | 12.0 | 3.7 |
| Comparative example 3 | 50 | 19 | 7.1 | 800 | 0.63 | 0.45 | 2.5 | 10.9 | 2.8 |
| Comparative example 4 | 50 | 16 | 5.5 | 400 | 0.60 | 0.41 | 2.8 | 9.4 | 2.0 |

Based on the results in table 1, it is understood that, in the case of each catalyst powder of the present invention that has a value of the average catalyst carrier pore diameter (A) / the metal catalyst particle (PGM) diameter (B) of 0.5 to 1.8, no significant increase in the average particle diameter was observed after the 1000-hour endurance test compared with the average particle diameter before such test. In each case, the value was found to be suppressed to less than 5.0 nm even after the test. In addition, the average carrier pore diameter was 2.5 nm or less, indicating that such pore diameter is within the pore diameter range of a conductive carbon material. On the other hand, in the case of each catalyst powder of the Comparative examples, a large increase in the average particle diameter was observed after the 1000-hour endurance test compared with the average particle diameter before such test, indicating that catalyst particles significantly grew. Further, the average carrier pore diameter was 2.5 nm or more, indicating that such pore diameter is not within the pore diameter range of a conductive carbon material.

Likewise, based on the results shown in fig. 2, it is understood that, in the case of each catalyst powder of the present invention, a large increase in the average particle diameter was not observed after the 1000-hour endurance test compared with the average particle diameter before such test. In each case, the average particle diameter was suppressed to not more than 3 times as large as that of the initial diameter. On the other hand, in the case of catalyst powder of the Comparative examples, a large increase in the average particle diameter was observed so that the average particle diameter after the 1000-hour endurance test was not less than 4 times as large as that before the test. Thus, it is understood that catalyst particles grew significantly.

### [Characteristics evaluation]

With the use of each catalyst powder obtained in Examples 1 to 6 and Comparative examples 1 to 4, a single cell electrode for polymer electrolyte fuel cells was formed in the following manner. Each electrode was obtained by dispersing each metal support catalyst powder in a mixed solution of an organic solvent and a conductive material and applying the obtained dispersion solution to an electrolyte membrane by spraying. The Pt catalyst amount was 0.4 mg per 1 cm² of the electrode area.

A diffusion layer was provided on each side of the electrode such that a single cell electrode was formed. Humidified air that had been allowed to pass through a bubbler heated at 70°C (1 L/min) was provided to the cathode electrode of the single cell and humidified hydrogen that had been allowed to pass through a bubbler heated at 85°C (0.5 L/min) was provided to the anode electrode thereof, followed by measurement of initial current-voltage characteristics. Durability evaluation was carried out by an on-off endurance test for 1000 hours. The results obtained for the initial voltage and those obtained for the voltage after the endurance test were compared for evaluation at a current density 0.1 A/cm².

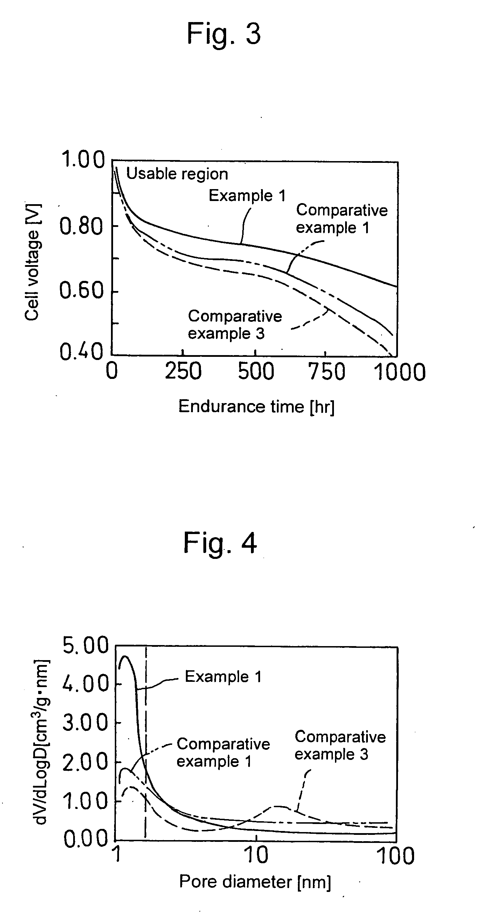

Fig. 3 shows the relationship between the endurance time and the current-voltage. Based on the results of fig. 3, it is understood that the results obtained in Example 1 of the present invention are superior to those obtained in Comparative examples 1 and 3 in terms of endurance time.

Also, similar results were obtained in Examples 2 to 6.

Table 1 shows the relationship between carrier specific surface area and the cell voltage after a 1000-hour endurance test. In Examples 1 to 6, the cell voltage after the endurance test was 0.5 V or more. In Comparative examples 1 to 4, the cell voltage after the elapse of endurance time was less than 0.5 V. In addition, it is understood that, in Examples 1 to 4 of the present invention, the specific surface area was 2000 m²/g or more, while, in Comparative examples 1 to 4, the specific surface area was less than 2000 m²/g.

The above results are summarized as follows.

Based on the endurance test results for the single cell prepared with the use of the catalyst of Example 1 and those for the single cells prepared with the use of catalysts of Comparative examples 1 and 2, a higher cell voltage than that obtained with the use of conventional catalysts was obtained after the endurance test in the case of the catalyst of the present invention having a value of the average catalyst carrier pore diameter / the catalyst metal (PGM) particle diameter of 0.5 to 1.8. Thus, it is possible to confirm that the catalyst of the present invention has improved durability performance.

Fig. 4 shows pore distributions of the activated carbon of Example 1, the activated carbon of Comparative example 1, and the carbon black of Comparative example 3. Based on the results in fig. 4, it is possible to confirm that the activated carbon of the present invention in which pores having diameters of 25 nm or less account for 60% of the total pore volume is excellent in durability. This is because, as shown in fig. 1, pores in a conductive carbon material are filled with Pt, resulting in suppression of Pt sintering. On the other hand, in the case of Comparative example 1, such effects are less likely to be obtained because there are not enough pores in which Pt can be supported. Further, in the case of Comparative example 3, Pt is supported in different types of carbon pores and thus such effects cannot be expected. Furthermore, based on table 1, it is possible to confirm that catalyst particle growth is less likely to occur with the use of a conductive carbon material in which pores having diameters of 1.3 nm to 2.45 nm account for 60% of the total pore volume.

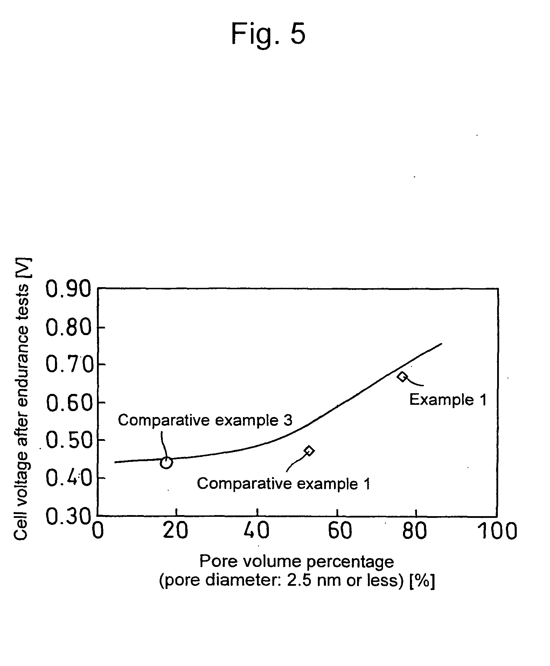

Fig. 5 shows the relationship between the pore volume percentage (pore diameter of 2.5 nm or less) and the voltage after a 1000-hr endurance test. Based on the results of fig. 5, it is confirmed that voltage drops are unlikely to occur even after endurance tests when the pore volume (pore diameter of 2.5 nm or less) accounts for 60% or more of the total pore volume.

In addition, in the case of Example 4, even when the pore diameter of a conductive carbon material serving as a carrier does not correspond to the initial particle diameter of the catalyst metal (PGM) particle, particle growth (sintering) of catalyst particles is suppressed by allowing particles of a catalyst metal (PGM) to be at least partially contained in pores of the carrier supporting such catalyst particles. Accordingly, even after endurance tests, high power generation performance can be maintained.

### Industrial Applicability

As described above, according to the present invention, when a conductive carbon material serving as a carrier is allowed to have a pore diameter substantially equivalent (at a nano-order level) to the initial particle diameter of catalyst particles or even when the pore diameter in a conductive carbon material serving as a carrier does not correspond to the initial particle diameter of catalyst metal (PGM) particles, particle growth (sintering) of catalyst particles is suppressed by allowing catalyst metal (PGM) particles to be at least partially contained in pores of the carrier supporting such catalyst particles. Accordingly, even after endurance tests, high power generation performance can be maintained. Thus, it becomes possible to construct a polymer electrolyte fuel cell provided with the fuel cell catalyst of the present invention, which is excellent in durability and is less likely to experience voltage drops even after long-term use. Therefore, the present invention contributes to practical and widespread use of fuel cells.

## Claims

1. A fuel cell catalyst in which catalyst particles are supported on a carrier, wherein the value of the average catalyst carrier pore diameter / the catalyst metal (PGM) particle diameter is 0.5 to 1.8.

2. The fuel cell catalyst according to claim 1, wherein the carrier is a conductive carbon material in which pores having a diameter of 2.5 nm or less account for 60% or more of the total pore volume.

3. The fuel cell catalyst according to claim 1 or 2, wherein the specific surface area of the carrier that is a conductive carbon material is 2000 m²/g or more.

4. The fuel cell catalyst according to any one of claims 1 to 3, wherein the conductive carbon material comprises activated carbon or carbon black.

5. The fuel cell catalyst according to any one of claims 1 to 4, wherein the average particle diameter after a 1000-hour endurance test is suppressed to 5.0 nm or less.

6. A fuel cell electrode in which the fuel cell catalyst according to any one of claims 1 to 5 is used for an anode and/or cathode.

7. A polymer electrolyte fuel cell comprising an anode, a cathode, and a polymer electrolyte membrane that is provided between the anode and the cathode, in which a fuel cell electrode in which the fuel cell catalyst according to any one of claims 1 to 6 is used for the anode and/or cathode is provided.
